# EUROPÄISCHE PATENTANMELDUNG

(11) **EP 3 756 432 A1**
(43) Veröffentlichungstag der Anmeldung: **30.12.2020**
(21) Anmeldenummer: 20172753.4
(22) Anmeldetag: 04.05.2020
(51) Int. Cl.: A01B 39/18, A01B 69/00, A01B 79/00

(54) **VERFAHREN UND GERÄT ZUM STRIEGELN**

(30) Priorität: 27.06.2019 AT 2352019
(71) Anmelder: Thomas Hatzenbichler Agro-Technik GmbH, 9433 St. Andrä im Lavanttal (AT)
(72) Erfinder: GERHARDS, Roland, 73066 Uhingen (DE); PETEINATOS, Gerassimos, 70599 Stuttgart (DE); NABOUT, Adnan, 63075 Offenbach (DE); SPAETH, Michael, 72800 Eningen unter Achalm (DE); SOEKEFELD, Markus, 53111 Bonn (DE)
(74) Vertreter: Beer & Partner Patentanwälte KG

(57) **Zusammenfassung**

Ein als Striegel ausgebildetes Gerät (1) besitzt ein Traggestell (2), an dem verschwenkbar Striegelzinken (4) angeordnet sind. Zum Verstellen des Striegelwinkels (14) ist ein Antrieb (5) vorgesehen. Beim Striegeln werden die Striegelzinkel (4) kontinuierlich so ausgerichtet, dass die Striegelzinken (4) beim Überschreiten eines Schwellenwertes für den Pflanzenverschüttungsgrad steiler und beim Unterschreiten des Schwellenwertes flacher gestellt werden. Für das laufende Ermitteln des Pflanzenverschüttungsgrades werden von zwei Kameras (8, 10) aufgenommene Bilder analysiert und mit dem Schwellenwert verglichen. Die als Pflanzenverschüttungsgrad ausgewerteten Bilder können hinsichtlich Aufnahmezeitpunkt und - ort gespeichert werden.

## Beschreibung

Die Erfindung betrifft ein Verfahren und ein Gerät zum Striegeln.

Geräte (Bodenbearbeitungsgeräte) zum Striegeln, die auch als "Striegel" bezeichnet werden, sind bekannt. Beispielsweise wird auf den im Prospekt "Hatzenbichler AUSTRIAN-AGRO-TECHNIK" gezeigten und beschriebenen "Original-Striegel" verwiesen. Dieser bekannte Striegel besitzt ein Traggestell mit mehreren Holmen, an denen Striegelzinken befestigt sind. Die Striegelzinken umfassen einen dreifach gewundenen Abschnitt, sodass die Zinken beim Bearbeiten des Bodens zum Entfernen von Unkraut aus Feldern mit Kulturpflanzen, wie Getreide, Soja, Mais, Sonnenblumen, Erdbeeren, Zuckerrüben, Raps und dgl., federnd eingesetzt werden können.

Ein weiteres Bodenbearbeitungsgerät ist aus EP 1 961 283 B1 bekannt. Dieses bekannte Bodenbearbeitungsgerät, das zum Pflegen der Bodenflächen von Kulturpflanzungen bestimmt ist, besitzt ein Traggestell und mehrere, an dem Traggestell verschwenkbar angeordnete Striegelzinken. Weiters ist eine den Striegelzinken zugeordnete Verstelleinrichtung vorgesehen, mit der die über Schraubenfedern bewirkte Vorspannung der Striegelzinken eingestellt werden kann. Problematisch bei dem aus EP 1 961 283 B1 bekannten Bodenbearbeitungsgerät ist es, dass die Striegelzinken über Schraubenfedern vorgespannt werden, was nicht nur ein erheblicher Aufwand, sondern auch störanfällig ist.

Bekannt ist weiters ein Bodenbearbeitungsgerät mit mehreren Striegelzinken, bei welchem die Striegelzinken an Hebeln befestigt sind, die über Träger an Holmen des Traggestells verschwenkbar gelagert sind. Durch Anliegen der Hebel an Anschlägen, die an den Holmen vorgesehen sind, ist die Wirkstellung der Striegelzinken definiert. Die Striegelzinken werden durch ihnen zugeordnete Federn in Form von Pneumatikzylindern in ihre Wirkstellung vorgespannt.

Das Striegeln im Nachlauf bekämpft einjähriges Unkraut in Kulturpflanzungen. Bodenbearbeitungsgeräte bekämpfen beim Striegeln Unkraut, indem Unkraut mit Erdreich verschüttet, herausgerissen oder entwurzelt wird. Problematisch ist dabei, dass durch das Striegeln auch Kulturpflanzen (z.B. Getreide, Leguminosen) beeinflusst werden. Großsamige Kulturpflanzen sind häufig stärker verwurzelt als kleinsamiges Unkraut, so dass zum Entwurzeln und Verschütten von Unkraut beim Striegeln eine geringere Intensität ausreicht, um Unkraut erfolgreich zu bekämpfen.

Es ist beim Striegeln darauf zu achten, dass die von der Ausrichtung der Striegelzinken abhängige Intensität des Einwirkens der Striegelzinken des Bodenbearbeitungsgerätes (Striegel) so gewählt wird, dass selektiv nur Unkraut, nicht aber Kulturpflanzen beeinflusst werden, und sich Kulturpflanzen vom Striegeln erholen können. Das Erholen von Kulturpflanzen ist ebenfalls ein wichtiger Parameter für die Wahl der Intensität des Striegelns.

Der Zeitpunkt des Striegelns hat Einfluss auf den Erfolg des Bekämpfens von Unkraut. Die Selektivität und der Erfolg des Bekämpfens von Unkraut durch Striegeln sind in der Regel in frühen Entwicklungsstadien von Kulturpflanzen höher. Bei Wintergerste ist Striegeln im BBCH-Code-Stadium 12 (2-Blatt) erfolgreicher als im BBCH-Code-Stadium 24 (4 Bestockungstriebe). Allerdings ist die Selektivität annähernd gleich, wenn die Intensität des Striegelns angepasst wird. Vorteilhaft wird das Striegeln ausgeführt, wenn die Kulturpflanzen weiter entwickelt sind als das Unkraut.

Die Intensität des Striegelns kann durch die Ausrichtung der Striegelzinken, insbesondere durch Wahl des Striegelwinkels - also des Winkels, den die Striegelzinken mit dem zu bearbeitenden Boden einschließen -, durch die Geschwindigkeit, mit welcher das Bodenbearbeitungsgerät bewegt wird, und/oder durch die Zahl der Überfahrten geändert und angepasst werden.

Der Erfindung liegt die Aufgabe zugrunde, ein Verfahren und ein Gerät zum Striegeln zur Verfügung zu stellen, bei welchen die Ausrichtung der Striegelzinken und damit die Intensität des Striegelns den jeweiligen Erfordernissen, insbesondere selbsttätig (automatisch), angepasst werden kann.

Gelöst wird diese Aufgabe erfindungsgemäß mit einem Verfahren, das die Merkmale von Anspruch 1, und mit einem Gerät, das die Merkmale von Anspruch 11 aufweist.

Bevorzugte und vorteilhafte Ausgestaltungen des erfindungsgemäßen Verfahrens und des Gerätes sind Gegenstand der Unteransprüche.

Die Erfindung stellt eine neue Technik zum vorzugsweise kameragesteuerten Regeln der Intensität des Striegelns zur Kontrolle (Bekämpfen) von Unkraut in Kulturpflanzungen (Getreide, Leguminosen) dar. Die richtige Intensität des Striegelns wird in Echtzeit über das Ändern der Ausrichtung der Striegelzinken (des Zinkenwinkels) verwirklicht. Die Regelgröße für die passende Ausrichtung der Striegelzinken (des Zinkenwinkels) ist ein Pflanzenverschüttungsgrad ("PSC"). Dabei kann vorgesehen sein, dass der Pflanzenverschüttungsgrad (PSC) mit Hilfe von Bildern, die von auf den zu bearbeitenden Boden gerichteten Kameras, bezogen auf die Arbeitsrichtung vor und nach dem Gerät, erzeugt werden, ermittelt wird.

In einer möglichen Ausführungsform des erfindungsgemäßen Verfahrens kann vorgesehen sein, dass die Ausrichtung der Striegelzinken kontinuierlich geändert wird.

In einer möglichen Ausführungsform des erfindungsgemäßen Verfahrens kann vorgesehen sein, dass die Ausrichtung der Striegelzinken auf einer Anzeigeeinrichtung angezeigt wird.

Bei dem erfindungsgemäßen Gerät kann ein Anzeigegerät vorgesehen sein, auf dem der Striegelwinkel, den die Striegelzinken mit dem zu bearbeitenden Boden einschließen, angezeigt ist.

Beispielsweise wird der Pflanzenverschüttungsgrad (PSC) unter Anwenden der Formel $PSC = 100 \times \left(\left({L}_{0}-L\right)/{L}_{0}\right)$ ermittelt, wobei L₀ die Pflanzenbedeckung vor dem Striegeln und L die Pflanzenbedeckung nach dem Striegeln bedeutet.

Im Rahmen der Erfindung kann so vorgegangen werden, dass der erfasste Pflanzenverschüttungsgrad (PSC) mit einem Schwellenwert für den Pflanzenverschüttungsgrad (PSC) verglichen wird, wobei bevorzugt ist, dass ein Schwellenwert im Bereich 5 bis 25 % gewählt wird und insbesondere 20 % beträgt.

Im Rahmen des erfindungsgemäßen Striegelns können die Striegelzinken bei einem Pflanzenverschüttungsgrad (PSC), der über dem Schwellenwert liegt, steiler im Sinne einer Vergrößerung des Striegelwinkels gestellt werden, und die Striegezinken bei einem Pflanzenverschüttungsgrad (PSC), der unter dem Schwellenwert liegt, flacher im Sinne einer Verkleinerung des Striegelwinkels gestellt werden.

Im Rahmen der Erfindung kann vorgesehen sein, dass zum Erfassen der Bilder Kameras, wie full-frame RGB-Kameras (Vollbild RGB Kameras), verwendet werden, die beispielsweise in einer Höhe von 1,2 m über dem Boden angebracht sind. Dabei ist es bevorzugt, wenn eine Kamera im Frontanbau des Gerätes und eine weitere Kamera im Heck des Gerätes angeordnet ist.

Bei der Erfindung kann vorgesehen sein, dass aus jeweils einem Bild beider Kameras der Pflanzenverschüttungsgrad (PSC) berechnet und mit dem Schwellenwert verglichen wird. Der Schwellenwert entspricht einem bestimmten Wert des Pflanzenverschüttungsgrades.

Dabei kann vorgesehen sein, dass die Ausrichtung der Striegelzinken und damit die Intensität des Striegelns geändert, nämlich erhöht oder verringert wird, je nachdem, ob der Schwellenwert überschritten oder unterschritten wird. Bevorzugt ist es, wenn die auf den Schwellenwert gestützte Entscheidung auf Grundlage von je sechs Bildpaaren getroffen wird.

Die Erfindung erlaubt es, den jeweiligen Pflanzenverschüttungsgrad bildanalytisch zu quantifizieren, wobei die erfassten und ermittelten Werte für den Pflanzenverschüttungsgrad mit dem Schwellenwert verglichen werden.

Bei dem erfindungsgemäßen Verfahren wird in einer bevorzugten Ausführungsform ein digitales Bildanalyseverfahren vorwendet, das kontinuierlich den Pflanzenverschüttungsgrad, der von dem Gerät bewirkt wird, größenmäßig erfasst. Der Pflanzenverschüttungsgrad wird zum Einstellen der Intensität des Striegelns durch Ändern der Ausrichtung der Striegelzinken verwertet.

Ein bei dem erfindungsgemäßen Verfahren in einer Ausführungsform verwendbarer Rechner, der als Expertensystem (decision algorithm) dient, ermittelt und verwirklicht für jede Position die beste Ausrichtung (Stellung) der Striegelzinken (Einstellung des Zinkenwinkels) im Sinne der höchsten Selektivität. Nachstehend werden weitere Merkmale und Einzelheiten der Erfindung anhand von in den Zeichnungen schematisch dargestellten Ausführungsbeispielen erläutert. Es zeigt:
- Fig. 1: in Seitenansicht ein erfindungsgemäßes Gerät (Striegel)
- Fig. 2: Beispiele für ein RGB-Bild (links) und ein ausgewertetes Binärbild (rechts),
- Fig. 3: eine Heckansicht des Gerätes von Fig. 1 und
- Fig. 4: eine Draufsicht auf das Gerät von Fig. 1.

Ein erfindungsgemäßes Gerät 1 ("Striegel") besitzt ein Traggestell 2, an dem mehrere Holme 3 vorgesehen sind. An den Holmen 3 sind Striegelzinken 4 angebracht. An dem Traggestell 2 sind vorne Stützräder 16 und eine Dreipunktaufhängung 15 vorgesehen.

Zum Ändern der Ausrichtung der Striegelzinken 4 sind die Holme 3 im Traggestell 2 um die Längsachsen der Holme 3 verdrehbar gelagert. Zum Verdrehen der Holme 3 und damit zum Schwenken der Striegelzinken 4 ist ein Antrieb 5 vorgesehen. Dieser Antrieb 5 kann Hydraulikzylinder umfassen.

Durch Betätigen des Antriebes 5 werden die Striegelzinken 4 geschwenkt, so dass deren Stellung zu dem zu bearbeitenden Boden, also der Striegelwinkel 14, geändert wird.

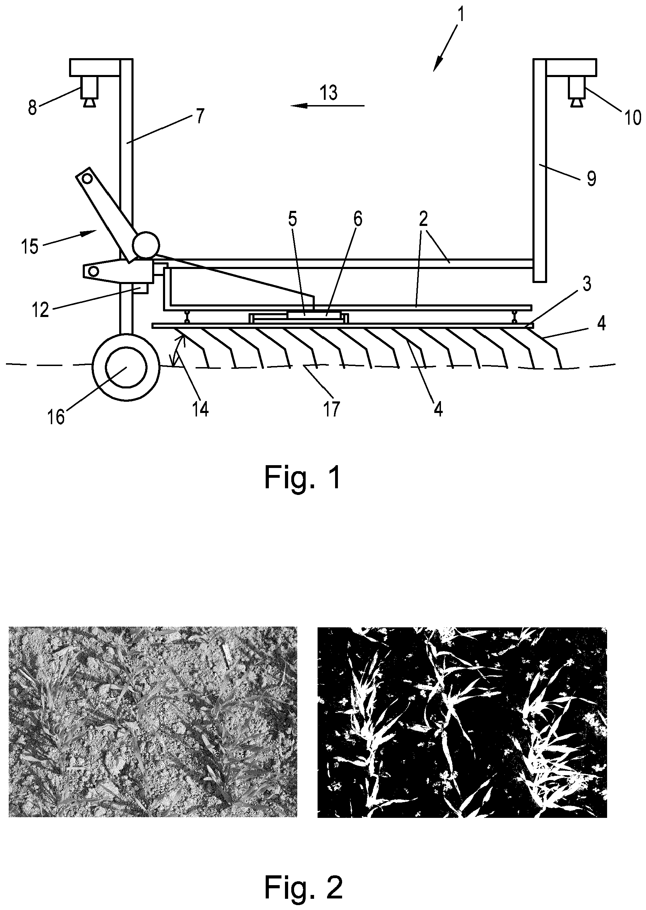

An dem Gerät 1 ist, bezogen auf die vorgegebene Arbeitsrichtung (Pfeil 13 in Fig. 1), über einen Träger 7 vorne eine auf den Boden 17 gerichtete Kamera 8, insbesondere eine full-frame RGB-Kamera, angebracht.

Eine weitere Kamera 10, die ebenfalls eine full-frame RGB-Kamera sein kann, ist über einen zweiten Träger 9 am Heck des Gerätes 1 angebracht und ebenfalls auf den zu bearbeitenden Boden 17 gerichtet.

Das Gerät 1 umfasst eine Steuereinheit 12, über die der Antrieb 5 zum Verschwenken der Striegelzinken 4 angesteuert wird.

Die Steuereinheit 5 ist funktionell mit einem Rechner verbunden. Insbesondere sind die Steuereinheit 5 und der Rechner zu einer Einheit kombiniert. Der Rechner dient als "Expertensystem" und vergleicht den erfassten Pflanzenverschüttungsgrad mit einem vorgegebenen Schwellenwert. Der Schwellenwert ist der Wert für die Bedeckung der Pflanzen, welche die Kulturpflanzen tolerieren oder überkompensieren können, d.h. bis zu dem Schwellenwert nehmen die Kulturpflanzen durch das Striegeln keinen Schaden.

Der Striegelwinkel 14, den die Striegelzinken 4 mit dem zu bearbeitenden Boden 17 einschließen, wird kontinuierlich in Abhängigkeit von dem Pflanzenverschüttungsgrad (PSC) geändert.

Der Pflanzenverschüttungsgrad (PSC) wird nach folgender Formel berechnet: $PSC = 100 \times \left(\left({L}_{0}-L\right)/{L}_{0}\right) .$

In dieser Formel bedeutet L₀ die Pflanzenbedeckung (Bedeckung der Kulturpflanzen und des Unkrautes mit Erdreich) vor dem Striegeln und L die Pflanzenbedeckung nach dem Striegeln. Auf Grundlage der von der Kamera 8 aufgenommenen Bilder wird der Wert von L₀ ermittelt. Auf Grundlage der von der Kamera 10 aufgenommenen Bilder wird der Wert von L ermittelt.

Die Werte für L₀ und L werden aus den Farbbildern der Kameras 8 und 10 berechnet, indem aus zu Image ExGR transformierten Bildern (automatisch) Binärbilder erzeugt werden, worauf die weißen Bildpunkte relativ zum Gesamtbild ermittelt werden.

Wenn ein Pflanzenverschüttungsgrad (PSC) zwischen 5 und 25 %, insbesondere von 20 % (= Schwellenwert des PSC) ermittelt wird, wird die Ausrichtung der Striegelzinken 4 (der Zinkenwinkel 14) nicht geändert. Falls der Pflanzenverschüttungsgrad (PSC) über dem Schwellenwert liegt, beispielsweise größer als 20 % ist, wird der Zinkenwinkel 14 vergrößert, d.h. die Striegelzinken 4 werden "steiler" gestellt, so dass sie weniger intensiv wirken. Wenn der Pflanzenverschüttungsgrad (PSC) unter dem Schwellenwert liegt, beispielsweise kleiner als 20 % ist, wird der Zinkenwinkel 14 verringert, so dass die Striegelzinken 4 mit dem zu bearbeitenden Boden einen kleineren Winkel einschließen und "flacher" sind, so dass sie stärker wirken.

Es ist erkannt worden, dass Getreide vom 3-Blattstadium bis Mitte der Bestockung die Fähigkeit hat, einen Pflanzenverschüttungsgrad von 20 % zu kompensieren. Bei einem Pflanzenverschüttungsgrad von 20 %, also beim bevorzugten Schwellenwert, beträgt der Erfolg beim Bekämpfen von Unkraut ungefähr 80 %.

Die an dem Gerät 1 angebrachten Kameras 8 und 10 nehmen beispielsweise Bilder mit einer Frequenz von sechs Bildern pro Sekunde auf. Jedes Bild wird zu "Excessive Green-Red" (Image ExGR) transformiert (Formeln 1 bis 3). ExGR ist eine Rechenoperation an Standard-Farbbildern (vgl. Meyer, G.E.; Hindmann, T.W.; Laksmi, K. Machine Vision Detection Parameters for plant Species Identification. In Proceedings of the Precision Agriculture and Biological Quality, Boston, MA, USA, 3-4 November 1999; Volume 3543, pp. 327-335. Woebbecke, D.M.; Meyer, G.E.; Von Bargen, K.; Mortensen, D.A. Color indices for weed identification under various soil, residue, and lighting conditions. Trans. ASAE 1995, 38, 259-269. Meyer, G.E.; Neto, J.C.; Jones, D.D.; Hindman, T.W. Intensified fuzzy clusters for classifying plant, soil, and residue regions of interest from color images. Comput. Electron. Agric. 2004, 42, 161-180. Hamuda, E.; Glavin, M.; Jones, E.A survey of image processing techniques for plant extraction and segmentation in the field. Comput. Electron. Agric. 2016, 125, 184-199.) Durch die Farbanalyse ExGR werden die spektralen Eigenschaften lebender Pflanzen verstärkt und die spektralen Eigenschaften des Bodens und toter Pflanzengewebe (Mulch) abgeschwächt. Das Ergebnis ist ein höherer Kontrast zwischen Pflanze und Bildhintergrund. Dies vereinfacht über eine automatische Grauwertschwelle das Erstellen von Binärbildern. Damit wird, unabhängig von den äußeren Aufnahmebedingungen, der Kontrast zwischen Pflanzen und Boden verstärkt. ${Image}_{ExGR} = {Image}_{ExG} - {Image}_{ExR}$ (1) ${Image}_{ExR} = \frac{1.4 ∗ {Image}_{red} - {Image}_{blue}}{{Image}_{red} + {Image}_{blue}}$ (2) ${Image}_{ExG} = \frac{2 ∗ {Image}_{green} - {Image}_{red} - {Image}_{blue}}{{Image}_{green} + {Image}_{red} + {Image}_{blue}}$ (3)

Die in den vorstehenden Gleichungen verwendeten Begriffe sind in den genannten Literaturstellen erläutert.

Anschließend werden aus den zu "ExGR transformierten Bildern über Grauschwellen Binärbilder (Pflanze - Boden) erzeugt, von welchen eines beispielhaft in Fig. 2 rechts wiedergegeben ist. Vgl. Gerhards R, Nabout A, Sökefeld M, Kühbauch W, Nour-Eldin (1993) Automatische Erkennung von acht Unkrautarten mit Hilfe digitaler Bildverarbeitung und Fouriertransformation. J. Agron. & Crop Science 171, 321-328. Gerhards R, Christensen S (2003) Real-time weed detection, decision making and patch spraying in maize (Zea mays L.), sugarbeet (Beta vulgaris L.), winter wheat (Triticum aestivum L.) and winter barley (Hordeum vulgare L.). Weed Research 43, 1-8.

Bei dem erfindungsgemäßen Gerät 1 ("Striegel") kann vorgesehen sein, dass die Bildaufnahme, die Bildverarbeitung und das Ermitteln der jeweils besten Ausrichtung der Striegelzinken in dem als "Expertensystem" dienenden Rechner (Vergleich des jeweiligen Pflanzenverschüttungsgrades mit dem vorgegebenen Schwellenwert) in einem Mikro-Kontroller mit grafischer Oberfläche ausgeführt werden.

Die Steuereinheit 12 ist im Ausführungsbeispiel auf dem Gerät 1 montiert. Die Steuereinheit 12 steuert den Antrieb 5 zum Ändern der Ausrichtung (Stellung) der Striegelzinken 4. Beispielsweise werden (Magnet-)Ventile, über welche die als Antrieb 5 zum Verstellen der Striegelzinken 4 dienenden Hydraulikzylinder 6 mit Hydraulikmedium beaufschlagt werden, betätigt.

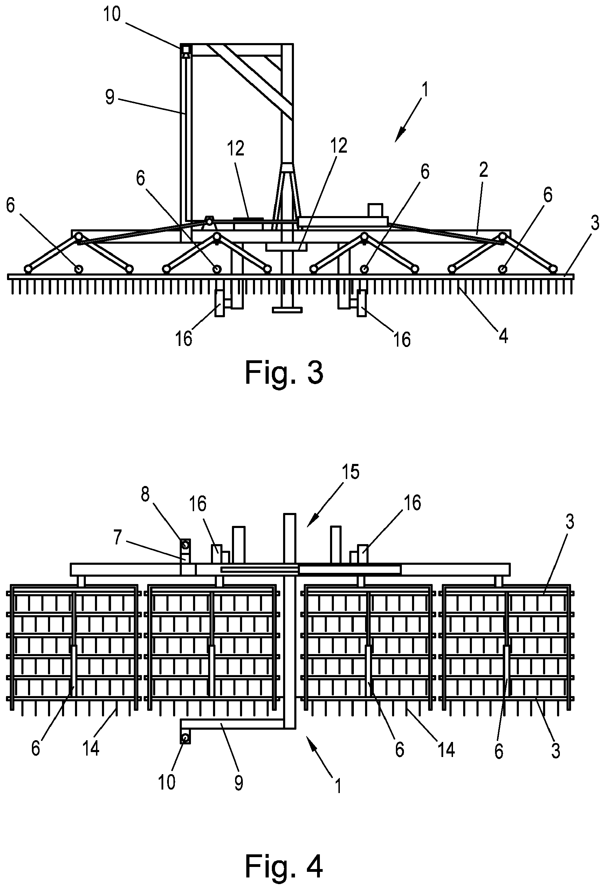

Im Rahmen der Erfindung ist es bevorzugt, dass der Zinkenwinkel 14 einheitlich für die gesamte Breite des Gerätes 1, also im Beispiel (Fig. 4) für alle Teile mit je 1,5 m Breite des Gerätes 1, eingestellt wird.

Der aktuelle Zinkenwinkel 14 (Ausrichtung der Striegelzinken 4 zum zu bearbeitenden Boden) wird elektronisch angezeigt und wird der Steuereinheit ("Kontroller") als Eingangsgröße aufgegeben.

Das erfindungsgemäße Verfahren und das erfindungsgemäße Gerät 1 erlauben es, das Striegeln an jeder Position im Feld mit der höchsten Selektivität auszuführen. Damit werden Schäden an Kulturpflanzen vermieden und der Erfolg des Bekämpfens von Unkraut wird erhöht.

Durch die beim erfindungsgemäßen Gerät 1 vorgesehene Anpassung der Ausrichtung der Striegelzinken 4 kann die Heterogenität landwirtschaftlicher Pflanzen berücksichtigt werden, und das Gerät 1 ist zum Striegeln in verschiedenen Entwicklungsstadien von Kulturpflanzen erfolgreich einsetzbar.

Zusammenfassend kann ein Ausführungsbeispiel der Erfindung wie folgt beschrieben werden:
Ein als Striegel ausgebildetes Gerät 1 besitzt ein Traggestell 2, an dem verschwenkbar Striegelzinken 4 angeordnet sind. Zum Verstellen des Striegelwinkels 14 ist ein Antrieb 5 vorgesehen. Beim Striegeln werden die Striegelzinken 4 kontinuierlich so ausgerichtet, dass die Striegelzinken 4 beim Überschreiten eines Schwellenwertes für den Pflanzenverschüttungsgrad steiler und beim Unterschreiten des Schwellenwertes flacher gestellt werden. Für das laufende Ermitteln des Pflanzenverschüttungsgrades werden von zwei Kameras 8, 10 aufgenommene Bilder analysiert und mit dem Schwellenwert verglichen. Die als Pflanzenverschüttungsgrad ausgewerteten Bilder können hinsichtlich Aufnahmezeitpunkt und -ort gespeichert werden.

## Patentansprüche

1. Verfahren zum Striegeln, bei dem ein Gerät verwendet wird, das schwenkbare Striegelzinken, die in den Boden eingreifen, um Pflanzen mit Erdreich zu verschütten, aufweist, **dadurch gekennzeichnet, dass** der Pflanzenverschüttungsgrad (PSC) erfasst und die Ausrichtung der Striegelzinken in Abhängigkeit vom Pflanzenverschüttungsgrad (PSC) geändert wird.

2. Verfahren nach Anspruch 1, **dadurch gekennzeichnet, dass** der Pflanzenverschüttungsgrad (PSC) mit Hilfe von Bildern ermittelt wird, wobei die Bilder von auf den zu bearbeitenden Boden gerichteten Kameras, bezogen auf die Arbeitsrichtung, vor und nach dem Bearbeitungsgerät erzeugt werden.

3. Verfahren nach Anspruch 1 oder 2, **dadurch gekennzeichnet, dass** der Pflanzenverschüttungsgrad (PSC) unter Anwenden der Formel $PSC = 100 \times \left(\left({L}_{0}-L\right)/{L}_{0}\right)$ ermittelt wird, wobei L₀ die Pflanzenbedeckung vor dem Striegeln und L die Pflanzenbedeckung nach dem Striegeln bedeutet.

4. Verfahren nach einem der Ansprüche 1 bis 3, **dadurch gekennzeichnet, dass** der erfasste Pflanzenverschüttungsgrad (PSC) mit einem Schwellenwert für den Pflanzenverschüttungsgrad (PSC) verglichen wird.

5. Verfahren nach Anspruch 4, **dadurch gekennzeichnet, dass** ein Schwellenwert im Bereich 5 bis 25 % gewählt wird und insbesondere 20 % beträgt.

6. Verfahren nach Anspruch 4 oder 5, **dadurch gekennzeichnet, dass** die Striegelzinken bei einem Pflanzenverschüttungsgrad (PSC), der über dem Schwellenwert liegt, steiler im Sinne einer Vergrößerung des Striegelwinkels gestellt werden, und dass die Striegelzinken bei einem Pflanzenverschüttungsgrad (PSC), der unter dem Schwellenwert liegt, flacher im Sinne einer Verkleinerung des Striegelwinkels gestellt werden.

7. Verfahren nach einem der Ansprüche 1 bis 6, **dadurch gekennzeichnet, dass** die von den Kameras aufgenommenen Bilder zu Excessive Green Red (ExGR) transformiert und anschließend über Graussschwellen Binärbilder erzeugt werden, wobei die Formeln ${Image}_{ExGR} = {Image}_{ExG} - {Image}_{ExR}$ (1) ${Image}_{ExR} = \frac{1.4 ∗ {Image}_{red} - {Image}_{blue}}{{Image}_{red} + {Image}_{blue}}$ (2) ${Image}_{ExG} = \frac{2 ∗ {Image}_{green} - {Image}_{red} - {Image}_{blue}}{{Image}_{green} + {Image}_{red} + {Image}_{blue}}$ (3) angewendet werden.

8. Verfahren nach Anspruch 7, **dadurch gekennzeichnet, dass** auf Grundlage der Binärbilder die Werte L₀ und L der Pflanzenbedeckung berechnet werden, wobei weiße Bildpunkte relativ zum Gesamtbild ermittelt werden.

9. Gerät (1) zum Durchführen des Verfahrens nach einem der Ansprüche 1 bis 8, mit einem Holme (3) umfassenden Traggestell (2), mit mehreren an Holmen (3) des Traggestelles (2) angeordneten Striegelzinken (4) und mit wenigstens einem Holmen (3) zugeordneten Antrieb (5) zum Verdrehen von Holmen (3), wobei die Ausrichtung der Striegelzinken (4) durch Verdrehen von Holmen (3) veränderbar ist, **dadurch gekennzeichnet, dass** an dem Traggestell (1) wenigstens zwei Kameras (8, 10) vorgesehen sind, die zum Erfassen des Pflanzenverschüttungsgrades auf den zu bearbeitenden Boden (17) gerichtet sind und dass eine Steuereinheit (12) vorgesehen ist, die den Antrieb (5) für das Verdrehen von Holmen (3) ansteuert, um die Ausrichtung der Striegelzinken (4) in Abhängigkeit vom Pflanzenverschüttungsgrad zu ändern.

10. Gerät nach Anspruch 9, **dadurch gekennzeichnet, dass** ein Rechner vorgesehen ist, in welchem der Pflanzenverschüttungsgrad auf Grundlage der von den Kameras (8, 10) erfassten Bilder ermittelt und mit einem vorgegebenen Schwellenwert verglichen wird.

11. Gerät nach Anspruch 10, **dadurch gekennzeichnet, dass** der Rechner mit der Steuereinheit (12) kombiniert ist.

12. Gerät nach einem der Ansprüche 9 bis 11, **dadurch gekennzeichnet, dass** der Antrieb (5) zum Verdrehen von Holmen (3) beim Überschreiten und beim Unterschreiten des Schwellenwertes des Pflanzenverschüttungsgrades (PSC) zum Ändern der Ausrichtung der Striegelzinken (4) aktivierbar ist.

13. Gerät nach einem der Ansprüche 9 bis 12, **dadurch gekennzeichnet, dass** eine Kamera (8) an dem Traggestell (2), bezogen auf die Arbeitsrichtung (Pfeil 13), vorne und die andere der Kameras (10) hinten angeordnet sind.

14. Gerät nach einem der Ansprüche 9 bis 13, **dadurch gekennzeichnet, dass** die Kameras (8, 10) am Traggestell (2) über Träger (7, 9), die von dem Traggestell (2) auf der den Striegelzinken (4) gegenüberliegenden Seite abstehen, angeordnet sind.

15. Gerät nach einem der Ansprüche 9 bis 14, **dadurch gekennzeichnet, dass** als Kameras (8, 10) RGB-Kameras, insbesondere full-frame RGB-Kameras, vorgesehen sind.
